# EUROPEAN PATENT APPLICATION

(11) **EP 2 149 703 A2**
(43) Date of publication of application: **03.02.2010**
(21) Application number: 09166030.8
(22) Date of filing: 21.07.2009
(51) Int. Cl.: F03D 11/04

(54) **Wind turbine assembly with tower mount**

(30) Priority: 30.07.2008 US 182763
(71) Applicant: General Electric Company, Schenectady, NY 12345 (US)
(72) Inventor: Wambeke, Dustin Jon, Greenville, SC 29609 (US); Schakel, Mark Allen, Hendersonville, NC 28739 (US)
(74) Representative: Bedford, Grant Richard

(57) **Abstract**

A wind turbine assembly is configured for standing on a foundation. The wind turbine assembly includes a wind turbine generator (105), and a tower (102) having an upper end and a lower end. The tower (102) is configured to support the wind turbine generator (105) generally adjacent the upper end of the tower (102). The wind turbine assembly also includes a tower mount (127) for supporting the tower (102). The tower mount (127) has an upper end (128) and a lower end (130). The upper end (128) of the tower mount (127) is connectable with the lower end of the tower (102) and the lower end (130) of the tower mount is mountable on the foundation to secure the wind turbine assembly on the foundation. The tower mount (127) is tubular and has a height and an outer transverse cross-sectional dimension that is substantially greater than the height of the tower mount. The tower mount (127) includes a plurality of circumferential segments (135) that are connectable in generally end-to-end relationship to form the tubular tower mount (127).

## Description

The field of this disclosure relates generally to wind turbine assemblies, and more particularly to a mount for mounting the tower of such a wind turbine assembly on a foundation.

Wind turbines are increasingly used for the generation of electrical energy. A wind turbine typically comprises a rotor-driven turbine generator mounted atop a tower constructed of multiple tower sections that are stacked and secured together. These sections may be cylindrical, frusto-conical or other suitable shape, and may be generally solid, tubular, or lattice-type sections. For example, one conventional wind turbine assembly includes a tower in which the tower sections each comprise a single-piece cylindrical or frusto-conical wrought steel section. These sections are joined together to reach above ground a height sufficient to provide clearance for the turbine blades and to support the generator at an altitude where there are sufficient wind velocities for adequate power generation.

The lowermost tower section (often referred to as a base section) of the wind turbine assembly tower is secured to the foundation (e.g., a concrete slab or other suitable foundation). The diameter of each tower section, and in particular the base section must be large enough in cross-section (e.g., diameter) to withstand the aerodynamic loads produced by wind forces and gravitational loads that are imposed by the mass of the heavy turbine generator and the drive sections of the turbine. As wind turbine towers have become increasingly taller, the cross-sectional dimensions of the tower base section has created difficulties in the ground transportation (e.g., by truck or rail) of these base sections due to size limitations or roadways, bridges and tunnels through which these sections must pass in route to their assembly destination.

Wind turbine tower manufacturers have had to use other means, such as increasing the shell thicknesses of the sections or using guy wires, to hold smaller cross-sectioned towers in place and support the tower against the aerodynamic and structural loads encountered by the tower. While these measures have been helpful, they have their limits and have not sufficiently met the need for a wind turbine tower base section of a larger transverse cross-section that is also capable of ground transport.

In one aspect according to the present invention, a wind turbine assembly is provided that is configured for standing on a foundation. The wind turbine assembly includes a wind turbine generator, and a tower having an upper end and a lower end. The tower is configured to support the wind turbine generator generally adjacent the upper end of the tower. The wind turbine assembly also includes a tower mount for supporting the tower. The tower mount has an upper end and a lower end. The upper end of the tower mount is connectable with the lower end of the tower and the lower end of the tower mount is mountable on the foundation to secure the wind turbine assembly on the foundation. The tower mount is tubular and has a height and an outer transverse cross-sectional dimension that is substantially greater than the height of the tower mount. The tower mount includes a plurality of circumferential segments that are connectable in generally end-to-end relationship to form the tubular tower mount.

In another aspect, a tower mount is provided for mounting a wind turbine assembly on a foundation. The tower mount includes a plurality of circumferentially extending segments connectable in generally end-to-end relationship with each other so that the tower mount is generally tubular upon assembly thereof. The tower mount has an upper end and a lower end and the upper end of the tower mount is connectable with the wind turbine assembly to support the wind turbine assembly on the tower mount. The lower end of the tower mount is mountable on the foundation to secure the wind turbine assembly and tower mount on the foundation. The tower mount is configured to withstand overturning moments.

In another aspect, a method of assembling a wind turbine is provided. The method includes providing a tower having a top end and a bottom end, and providing a nacelle and blades associated with the tower. The method also includes providing a segmented base ring to support the tower at a base of the tower.

Various aspects and embodiments of the present invention will now be described in connection with the accompanying drawings, in which:
Fig. 1 is a schematic elevation of one embodiment of a wind turbine assembly mounted on a foundation by a tower mount.
Fig. 2 is a perspective view of one embodiment of the tower mount of the wind turbine assembly of Fig. 1;
Fig. 3 is cross-section taken in the plane of line 3-3 of Fig. 2;
Fig. 4 is an enlarged fragmented cross-section of a portion of the cross-section of Fig. 3;
Fig. 5 is a schematic of a prior art tower section of a prior art wind turbine assembly;
Fig. 6 is a schematic of a tower section supported by a tower mount similar to that of Fig. 2 and having the same height as the prior art tower of Fig. 5;
Fig. 7 is a schematic illustration of a plurality of the tower mounts of Fig. 2 disassembled and arranged on a ground transport vehicle for transportation; and
Fig. 8 is a perspective cross-section of a second embodiment of a tower mount.

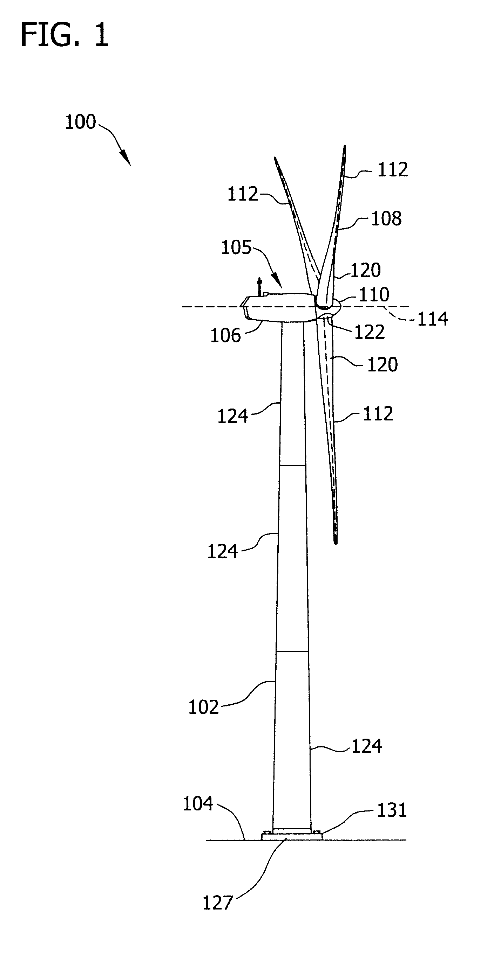

Referring now to the drawings and in particular to Figure 1, one embodiment of a wind turbine assembly is indicated generally at 100. In this embodiment, wind turbine assembly 100 comprises a horizontal axis 114 wind turbine. Alternatively, wind turbine assembly 100 may comprise a vertical axis wind turbine. Wind turbine assembly 100 generally comprises a tower 102 standing upright on a suitable foundation 104 (e.g., a concrete slab, ground surface or other suitable foundation), and a wind turbine generator, generally indicated at 105. Wind turbine generator 105 generally comprises a nacelle 106 mounted on tower 102, and a rotor 108 coupled to nacelle 106. Rotor 108 has a rotatable hub 110 and a plurality of rotor blades 112 coupled to hub 110. Illustrated rotor 108 suitably comprises three rotor blades 112. Alternatively, rotor 108 may have more or less than three rotor blades 112. Blades 112 are positioned about rotor hub 110 to facilitate rotating rotor 108 to transfer kinetic energy from the wind into usable mechanical energy, and subsequently, electrical energy. Blades 112 are mated to hub 110 by coupling a blade root portion 120 to hub 110 at a plurality of load transfer regions 122. Load transfer regions 122 have a hub load transfer region and a blade load transfer region (both not shown in Figure 1). Loads induced in blades 112 are transferred to hub 110 via load transfer regions 122.

Tower 102 is suitably tubular, and in the illustrated embodiment it is annular and has an internal cavity (not shown) extending longitudinally within tower 102 from foundation 104 up to nacelle 106. Tower 102 generally comprises a plurality of individual tower sections 124 that are connectable to each other in a stacked, end-to-end (e.g., one on top of the other) relationship to form tower 102. Tower sections 124 may each be of generally constant transverse cross-sectional dimension (e.g., a constant diameter in the illustrated embodiment in which tower sections 124 are each generally annular), or one or more of tower sections 124 may be frusto-conical, and/or the transverse cross-sectional dimension of one or more of tower sections 124 may be constant but different from that of one or more of the other tower sections - such as in a stepped configuration in which the transverse cross-sectional dimension of each tower section 124 decreases as the sections are stacked toward to the top of tower 102.

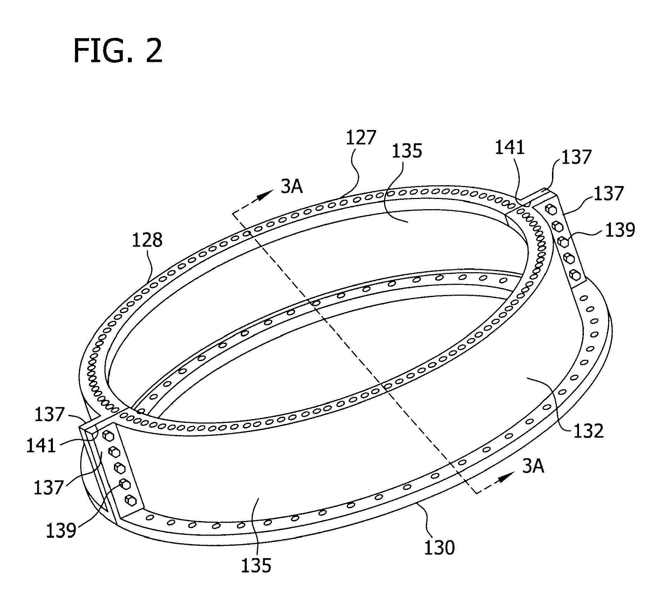

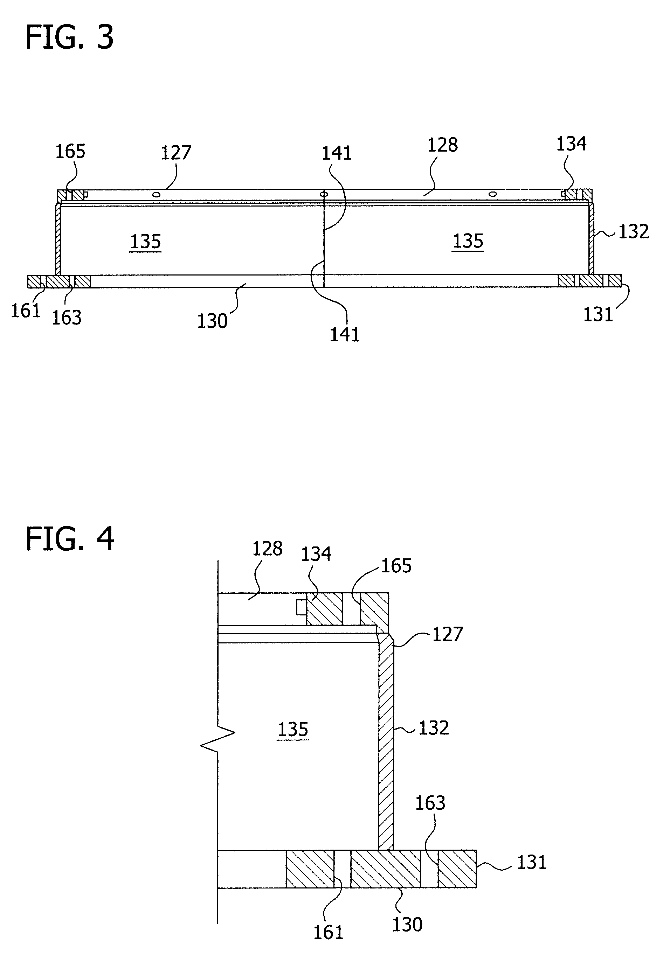

As illustrated in Fig. 1, a tower mount 127 is seated on and suitably secured to foundation 104 for supporting tower 102. With particular reference to Fig. 2, tower mount 127 is generally tubular in the manner of tower sections 124, and in the illustrated embodiment it is generally annular, and has an upper end 128, a lower end 130 (shown in Fig. 2) and a circumferential sidewall 132 (shown in Fig. 2) extending therebetween. The terms upper and lower are used herein with reference to the orientation of tower 102 as illustrated in Fig. 1. Lower end 130 is suitably configured for use in securing tower mount 127 to foundation 104. For example, as seen best in Figs. 3 and 4, lower end 130 comprises a flange member 131 extending both transversely inward and transversely outward relative to sidewall 132 and together with the adjacent portion of sidewall 132 is configured as a T-flange. An inner set of openings 161 and an outer set of openings 163 are formed in flange member 131 (e.g., on opposite sides of sidewall 132) for use in securing tower mount 127 to foundation 104, such as by suitable threaded fasteners (not shown) and corresponding nuts.

As seen in Fig. 3, the transversely outward extending portion of flange member 131 at lower end 130 of tower mount 127 provides a larger footprint, or transverse cross-sectional dimension (e.g., outer diameter in the illustrated embodiment) where tower mount 127 seats on foundation 104. This transverse cross-sectional dimension is suitably greater than that of the lowest tower section 124 of tower 102 (the section that seats on tower mount 127). This wider footprint of tower 102 provides an increased ability of tower 102 to withstand the overturning moments at tower mount 127 induced by aerodynamic and gravitational forces at the top of tower 102. In particular, this increased load handling ability allows, if desired, a relatively smaller transverse cross-sectional dimension to lowest tower section 124 of tower 102 without adding significant thickness requirements on lowest tower section 124 or other tower sections of tower 102.

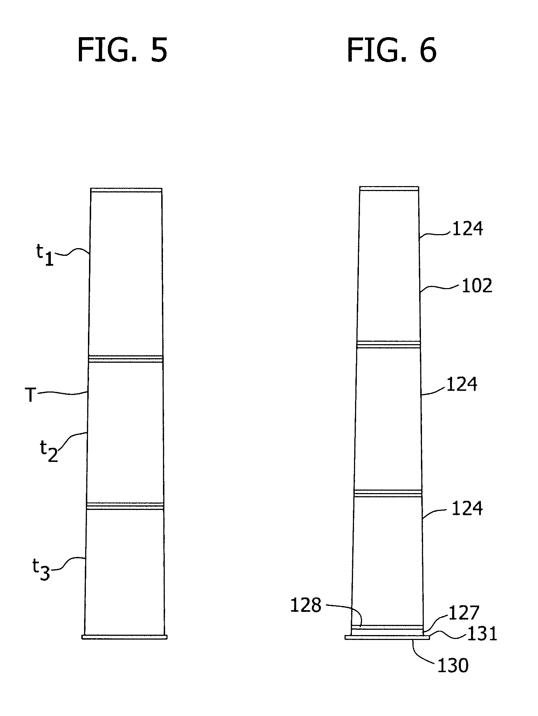

As an example, Fig. 5 illustrates a tower T of a prior art wind turbine assembly. Tower T comprises three tower sections t1, t2, t3 with the lowest or base section t3 mounted on a foundation F. The height of tower T is approximately 77.3 meters (approximately 253 feet), with the base section t3 being approximately 4.5 meters (approximately 15 feet) in diameter where it seats on foundation F. In Fig. 6 tower 102 is substantially the same height as the tower T of Fig. 5 and supported by tower mount 127 similar to that of Fig. 2. The footprint (outer transverse cross-sectional dimension) defined by flange member 131 of tower mount 127 is approximately 5 meters (about 16.4 feet). Due to the wider footprint provided by tower mount 127, lowest tower section 124 of tower 102 has a transverse cross-sectional dimension (i.e., diameter in the embodiment of Fig. 6) of about 4 meters (about 13.1 feet) which is less than that of the prior art tower T of Fig. 5 even though towers T, 102 are of the same overall height. Reducing the size of lowest tower section 124 of tower 102 accordingly reduces the overall weight of this lowest tower section (as well as other tower sections of tower 102), rendering the tower sections easier to transport.

Upper end 128 of tower mount 127 is suitably configured for connecting (i.e., securing) tower 102 to tower mount 127. As an example, in the illustrated embodiment upper end 128 comprises a flange member 134 extending transversely inward relative to circumferential sidewall 132 and having a plurality of openings 165 for receiving suitable threaded fasteners (not shown) therethrough. A lower end of lowest section 124 of tower 102 has a corresponding plurality of openings (not shown) for alignment with openings in flange member 134 to permit securement of tower 102 to flange member 134 by the threaded fasteners (not shown) and corresponding nuts (not shown). It is contemplated that tower 102 may be connected to upper end 128 of tower mount 127 other than by threaded fasteners, such as by welding or other suitable connection, without departing from the scope of this invention. It is also understood that upper end 128 may be configured such that flange member 134 extends transversely outward from sidewall 132, or it may be configured (together with sidewall 132) as a T-flange similar to lower end 130 of tower mount 127.

With reference back to Fig. 2, tower mount 127 is suitably comprised of a plurality of individual circumferentially extending segments 135 configured for connection to each other to form tubular (e.g., annular in the illustrated embodiment) tower mount 127. For example, in the embodiment illustrated in Fig. 2, tower mount 127 comprises two semi-annular segments 135 connectable at respective circumferential ends 141 of each segment. It is understood, however, that tower mount 127 may comprise more than two segments 135 without departing from the scope of this invention. In an alternative embodiment, an intermediate segment (not shown) extends between two segments 135 and is connected at respective circumferential ends 141 of each segment 135.

At or adjacent circumferential ends 141 of each tower mount segment 135 an external connecting flange 137 is secured to and is more suitably formed integral (e.g., by casting) with the outer surface of sidewall 132 of tower mount 127. In the illustrated embodiment each connecting flange 137 is generally rectangular and extends at least in part, and in the illustrated embodiment entirely, vertically along sidewall 132. It is understood, however, that connecting flange 137 may be other than rectangular without departing from the scope of this invention. Illustrated connecting flange 137 also suitably extends along sidewall 132 substantially the entire height of sidewall 132 from upper end to lower end of tower mount 127. In an alternative embodiment, connecting flange 137 extends less than the entire height of tower mount 127.

Openings 139 are disposed in each connecting flange 137 in spaced relationship along the length of the flange. Connecting flanges 137 and openings 139 are located and sized substantially the same for each circumferential segment 135 of tower mount 127. As such, upon placement of segments 135 in circumferential end-to-end relationship to form tower mount 127, openings 139 of adjacent connecting flanges 137 are aligned with each other to receive suitable threaded fasteners therethrough as illustrated in Fig. 2. Corresponding nuts are used to secure threaded fasteners on connecting flanges 137 to thereby secure together connecting flanges 137, and hence segments 135.

To sufficiently handle shear stress on connecting flanges 137, fillets (not shown) of suitable radii are formed where connecting flanges 137 join sidewall 132. In one suitable embodiment, the fillet radii are suitably in the range of about 10mm to about 30mm, and more suitably about 25mm. It is understood, however, that the fillet radii may be other than as set forth above, depending on necessary stresses to be withstood (with reduced stress generally accompanying larger fillet radii), and remain within the scope of this invention.

Tower mount 127 in one embodiment is suitably constructed of steel. For example, tower mount 127 may suitably comprise ASTM A36 steel and derivatives thereof. Other suitable materials may be used to make tower mount 127, however, without departing from the scope of this invention. More suitably, tower mount segments 135 (i.e., upper end 128, lower end 130, sidewall 132, and connecting flanges 137 including fillets joining sidewall 132 with connecting flanges 137) are each formed integrally and even more suitably are formed by casting. Casting in this manner provides both cost and design advantages over other fabrication techniques. It is understood, though, that other suitable fabrication techniques and methods may be used to make tower mount segments 135 without departing from the scope of this invention.

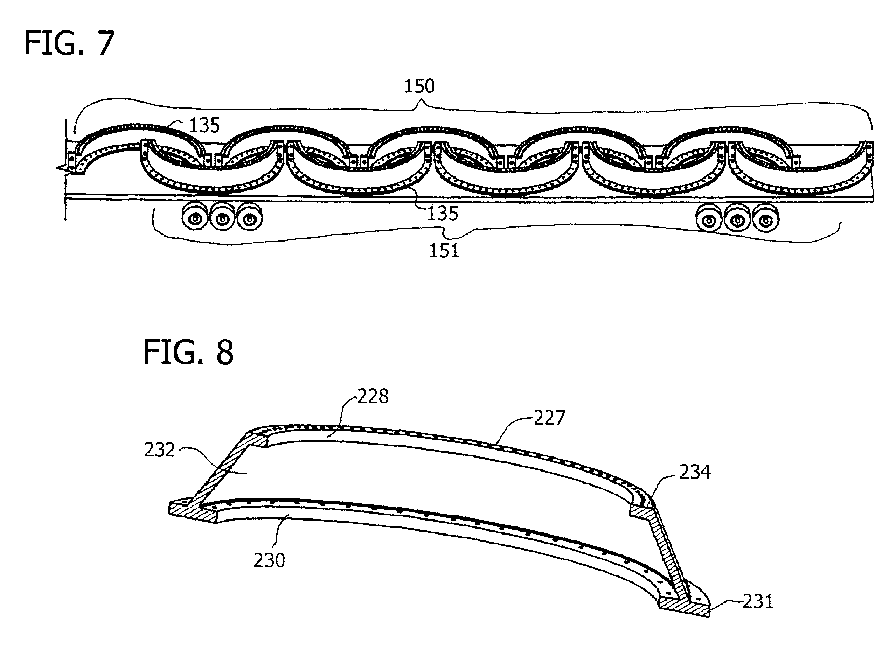

Figure 7 illustrates one embodiment of a method of arranging multiple tower mounts 127 on a ground transportation vehicle, such as a truck (as in the illustrated embodiment) or a rail car. In this embodiment, tower mounts 127 each comprise two circumferential segments 135 as in the embodiment of Fig. 2. Segments 135 are disassembled and arranged with one set 150 of segments 135 arranged longitudinally along the truck bed and a second set 151 of segments 135 arranged longitudinally along the truck bed but offset longitudinally relative to first set 150 of segments 135 so that circumferential ends of segments 131 from second set 151 of segments 135 can extend to adjacent the midsections of segments 135 from first set 150 of segments, and vice versa. In this manner, the overall width taken up by segments 135 on the truck bed is substantially less than the transverse cross-sections of tower mounts 127 when assembled. Segments 135 are also seated upright on the truck (i.e., with lower ends of segments 135 laying flat against the truck bed) so that the heights of segments 135 above the truck bed are relatively minimized. It is contemplated that other arrangements of segments 135 of tower mounts 127 may also allow for a reduced overall width of segments 135 needed on the truck without departing from the scope of this invention, as long as segments 135 are disassembled and seated upright on the ground transportation vehicle.

With reference now to Fig. 8, in a second embodiment a tower mount 227 is similar to tower mount 127, including an upper end having an inward extending flange member, a lower end having a flange member that extends both transversely inward and outward, and a sidewall 232 extending therebetween. In this embodiment, however, sidewall 232 is angled inward from its lower end to its upper end so that tower mount 227 is generally frusto-conical. The angle of sidewall 232 relative to horizontal is suitably in the range of about 60 to about 89 degrees. It is understood, however, that the angle may be other than in this range without departing from the scope of this invention.

When introducing elements of the present invention or preferred embodiments thereof, the articles "a", "an", "the", and "said" are intended to mean that there are one or more of the elements. The terms "comprising", "including", and "having" are intended to be inclusive and mean that there may be additional elements other than the listed elements.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

As various changes could be made in the above constructions and methods without departing from the scope of the invention, it is intended that all matter contained in the above description and shown in the accompanying drawings shall be interpreted as illustrative and not in a limiting sense.

Various aspects and embodiments of the present invention are now defined by the following numbered clauses ;
1. A wind turbine assembly configured for standing on a foundation, the wind turbine assembly comprising:
   a wind turbine generator;
   a tower having an upper end and a lower end, and configured to support the wind turbine generator generally adjacent the upper end of the tower; and
   a tower mount for supporting the tower, the tower mount having an upper end and a lower end, the upper end of the tower mount being connectable with the lower end of the tower, the lower end of the tower mount being mountable on the foundation to secure the wind turbine assembly on the foundation, said tower mount being tubular and having a height and an outer transverse cross-sectional dimension that is substantially greater than the height of the tower mount, said tower mount comprising a plurality of circumferential segments that are connectable in generally end-to-end relationship to form the tubular tower mount.
2. A wind turbine assembly in accordance with Clause 1, wherein the tower mount is generally annular.
3. A wind turbine assembly in accordance with any preceding Clause, wherein each of the circumferential segments of the tower mount has a pair of connecting flanges at or adjacent circumferentially opposite ends of the respective segment, wherein each connecting flange extends at least in part vertically along at least a portion of the height of the tower mount, each connecting flange of one circumferential segment being connectable to a respective connecting flange of a circumferentially adjacent circumferential segment to connect said segments together to assemble the tower mount.
4. A wind turbine assembly in accordance with any preceding any preceding Clause, wherein the tower has an outer transverse cross-sectional dimension at its lower end, the outer transverse cross-sectional dimension of the tower mount being greater than the outer transverse cross-sectional dimension of the lower end of the tower.
5. A wind turbine assembly in accordance with any preceding Clause, wherein the outer transverse cross-sectional dimension of the tower mount is defined by the lower end of the tower mount.
6. A wind turbine assembly in accordance with any preceding Clause, wherein the tower mount further comprises a sidewall extending between the upper and lower ends of the tower mount, the lower end of the tower mount comprising a flange member extending at least in part transversely outward of the tower mount sidewall.
7. A wind turbine assembly in accordance with any preceding Clause, wherein the tower mount further comprises a sidewall extending between the upper and lower ends of the tower mount, the sidewall being angled transversely inward as it extends from the lower end to the upper end of the tower mount.
8. A tower mount for mounting a wind turbine assembly on a foundation, the tower mount comprising a plurality of circumferentially extending segments connectable in generally end-to-end relationship with each other so that the tower mount is generally tubular upon assembly thereof, the tower mount having an upper end and a lower end, the upper end of the tower mount being connectable with the wind turbine assembly to support the wind turbine assembly on the tower mount, the lower end of the tower mount being mountable on the foundation to secure the wind turbine assembly and tower mount on the foundation, wherein said tower mount is configured to withstand overturning moments.
9. A tower mount in accordance with Clause 8, wherein said tower mount has a height and an outer transverse cross-sectional dimension, the outer transverse cross-sectional dimension of the tower mount being substantially greater than the height of the tower mount.
10. A tower mount in accordance with Clause 8 or 9, wherein said tower mount is connectable to a tower section and the tower mount transverse cross sectional dimension is greater than a transverse cross sectional dimension of the tower section to which it is connected.
11. A tower mount in accordance with any of Clauses 8 to 10, wherein the tower mount is generally annular.
12. A tower mount in accordance with any of Clauses 8 to 11, wherein each of the circumferential segments of the tower mount has a pair of connecting flanges at or adjacent circumferentially opposite ends of the respective segment, wherein each connecting flange extends at least in part vertically along at least a portion of the height of the tower mount, each connecting flange of one circumferential segment being connectable to a respective connecting flange of a circumferentially adjacent circumferential segment to connect said segments together to assemble the tower mount.
13. A tower mount in accordance with any of Clauses 8 to 12 wherein said flanges are connectable at an inside or outside of said tower mount.
14. A tower mount in accordance with any of Clauses 8 to 13, wherein the outer transverse cross-sectional dimension of said tower mount is defined by the lower end of the tower mount.
15. A tower mount in accordance with any of Clauses 8 to 14, wherein said tower mount further comprises a sidewall extending between the upper and lower ends of said tower mount, the lower end of said tower mount comprising a flange member extending at least in part transversely outward of said tower mount sidewall.
16. A tower mount in accordance with any of Clauses 8 to 15, wherein said tower mount further comprises a sidewall extending between the upper and lower ends of said tower mount, said sidewall being angled transversely inward as it extends from the lower end to the upper end of said tower mount.
17. A method of assembling a wind turbine comprising:
   providing a tower having a top end and a bottom end;
   providing a nacelle and blades associated with the tower; and
   providing a segmented base ring to support the tower at a base of the tower.
18. A method in accordance with Clause 17 wherein providing a segmented base ring comprises providing segments of a base ring that when assembled has a transverse cross sectional dimension that is greater than a cross sectional dimension of the tower bottom end.
19. A method in accordance with Clause 17 or 18 further comprising attaching a lower end of said base ring to a foundation.
20. A method in accordance with any of Clauses 17 to 19 further comprising attaching an upper end of said base ring to the tower bottom end.
21. A method in accordance with any of Clauses 17 to 20, wherein providing a segmented base ring comprises providing a segmented base ring wherein the cross sectional dimension of the base ring is greater than a height of the base ring.
22. A method in accordance with any of Clauses 17 to 21 wherein providing a segmented base ring comprises providing a segmented base ring having a flange at its lower end.
23. A method in accordance with any of Clauses 17 to 22 wherein providing a segmented base ring comprises providing a segmented base ring that is configured to withstand overturning moments of the wind turbine.

## Claims

1. A wind turbine assembly (100) configured for standing on a foundation (104), the wind turbine assembly comprising:
a wind turbine generator (105);
a tower (102) having an upper end and a lower end, and configured to support the wind turbine generator generally adjacent the upper end of the tower; and
a tower mount (127) for supporting the tower, the tower mount having an upper end (128) and a lower end (130), the upper end of the tower mount being connectable with the lower end of the tower, the lower end of the tower mount being mountable on the foundation to secure the wind turbine assembly on the foundation, said tower mount being tubular and having a height and an outer transverse cross-sectional dimension that is substantially greater than the height of the tower mount, said tower mount comprising a plurality of circumferential segments (135) that are connectable in generally end-to-end relationship to form the tubular tower mount.

2. A wind turbine assembly (100) in accordance with Claim 1, wherein the tower mount (127) is generally annular.

3. A wind turbine assembly (100) in accordance with any preceding Claim, wherein each of the circumferential segments (135) of the tower mount has a pair of connecting flanges (137) at or adjacent circumferentially opposite ends (141) of the respective segment, wherein each connecting flange extends at least in part vertically along at least a portion of the height of the tower mount (127), each connecting flange of one circumferential segment being connectable to a respective connecting flange of a circumferentially adjacent circumferential segment to connect said segments together to assemble the tower mount.

4. A wind turbine assembly (100) in accordance with any preceding Claim, wherein the tower (102) has an outer transverse cross-sectional dimension at its lower end, the outer transverse cross-sectional dimension of the tower mount (127) being greater than the outer transverse cross-sectional dimension of the lower end of the tower.

5. A wind turbine assembly (100) in accordance with any preceding Claim, wherein the outer transverse cross-sectional dimension of the tower mount (127) is defined by the lower end (130) of the tower mount.

6. A wind turbine assembly (100) in accordance with any preceding Claim, wherein the tower mount (127) further comprises a sidewall (132) extending between the upper and lower ends (128, 130) of the tower mount, the lower end of the tower mount comprising a flange member (131, 134) extending at least in part transversely outward of the tower mount sidewall.

7. A wind turbine assembly (100) in accordance with any preceding Claim, wherein the tower mount (127) further comprises a sidewall (132) extending between the upper and lower ends (128, 130) of the tower mount, the sidewall being angled transversely inward as it extends from the lower end to the upper end of the tower mount.

8. A tower mount (127) for mounting a wind turbine assembly (100) on a foundation (104), the tower mount comprising a plurality of circumferentially extending segments (135) connectable in generally end-to-end relationship with each other so that the tower mount is generally tubular upon assembly thereof, the tower mount having an upper end (128) and a lower end (130), the upper end of the tower mount being connectable with the wind turbine assembly to support the wind turbine assembly on the tower mount, the lower end of the tower mount being mountable on the foundation to secure the wind turbine assembly and tower mount on the foundation, wherein said tower mount is configured to withstand overturning moments.

9. A tower mount (127) in accordance with Claim 8, wherein said tower mount has a height and an outer transverse cross-sectional dimension, the outer transverse cross-sectional dimension of the tower mount being substantially greater than the height of the tower mount.

10. A tower mount (127) in accordance with Claim 8 or Claim 9 wherein said tower mount is connectable to a tower section (124) and the tower mount transverse cross sectional dimension is greater than a transverse cross sectional dimension of the tower section to which it is connected.
